# EUROPÄISCHE PATENTSCHRIFT

(11) **EP 0 311 562 B1**
(45) Veröffentlichungstag und Bekanntmachung des Hinweises auf die Patenterteilung: **10.02.1993**
(21) Anmeldenummer: 88810660.6
(22) Anmeldetag: 27.09.1988
(51) Int. Cl.: C09B 47/16, C07D 487/22

(54) **Herstellung von Dimethylaminomethyl-Kupferphthalocyanin**
Manufacture of dimethyl aminomethyl copper phthalocyanine
Fabrication de diméthylaminométhylphtalocyanine de cuivre

(30) Priorität: 03.10.1987 GB 8723258
(43) Veröffentlichungstag der Anmeldung: 12.04.1989
(73) Patentinhaber: CIBA-GEIGY AG, 4002 Basel (CH)
(72) Erfinder: Lambie, Ian Andrew, Neilston Glasgow, Schottland (GB); Yarrow, Paul, Paisley Schottland (GB); Langley, Robert 22 Cheviot Drive, Newton Mearns, Schottland G77 5AS (GB); Campbell, Colin Dennis, Dr. 1 Boghead, Beith, Schottland KA15 1DZ (GB)

(56) Entgegenhaltungen:
- DE-C- 852 588
- DE-C- 890 108
- FR-A- 2 333 836
- GB-A- 2 184 744
- HOUBEN-WEYL: "Methoden der organischen Chemie", Auflage 4, Band XI/1: "Stickstoffverbindungen II", Georg Thieme Verlag, Stuttgart, DE

## Beschreibung

Die vorliegende Erfindung betrifft die Herstellung von Dimethylaminomethyl-Kupferphthalocyanin, welches zur Verbesserung der Eigenschaften von Kupferphthalocyanin-Pigmenten in Druckfarben, Lacken und Kunststoffen eingesetzt wird.

Es handelt sich um eine bekannte Verbindung, die durch Umsetzung von Aminomethyl-Kupferphthalocyanin mit Ameisensäure und Formaldehyd nach folgendem Reaktionsschema 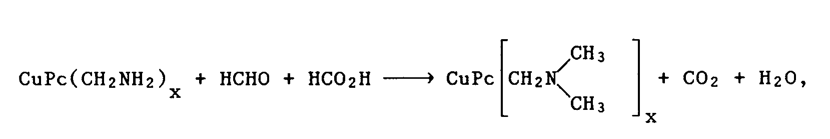
wobei CuPc Kupferphthalocyanin und x einen Durchschnittswert zwischen 1 und 4 bedeuten, hergestellt wird. Im allgemeinen werden Gemische von Produkten mit verschiedenen x-Werten hergestellt. Gemäss dem Stand der Technik ist es notwendig, um Additive brauchbarer Qualität zu erhalten, entweder konzentrierte Ameisensäure bei Normaldruck oder verdünnte Ameisensäure bei hohem Druck zu verwenden. Dies geht beispielsweise aus den GB-PS 7 24 212 und 2 184 744 hervor. Aus DE-C 852 588 ist die Herstellung von Aminomethyl-Cu-phthalocyanin mit mehr als 2 Aminomethylgruppen, durch Umsetzung von Cu-Phthalocyanin mit ω-Chlor-N-methylphthalimid in Gegenwart kondensierender Mittel in Verbindung mit tertiären Aminen oder mit wasserfreier Schwefelsäure und anschliessende Verseifung, bekannt. In Houben-Weyl Bd. XI/1 (1957), S. 79-80, ist die Herstellung N-substituierter Phthalimide aus Phthalimidkalium und organischen Halogeniden beschrieben.

Es ist nun gefunden worden, dass die Reaktion gemäss obigem Schema auch unter Verwendung von verdünnter Ameisensäure bei Normaldruck durchgeführt werden kann und dass dabei überraschenderweise ein Produkt entsteht, das mit Kupferphthalocyanin-Pigmenten ebenso gute Resultate ergibt wie die nach dem Stand der Technik hergestellten Produkte. Das neue Verfahren erlaubt einerseits die kostensparende Verwendung von verdünnter Ameisensäure und zugleich die vom Gesichtspunkt der Sicherheit unbedenkliche Arbeitsweise bei atmosphärischem Druck. Ausserdem ist es dafür nicht nötig über die für das Arbeiten bei hohem Druck erforderlichen speziellen apparativen Einrichtungen zu verfügen.

Demnach betrifft die vorliegende Erfindung ein Verfahren zur Herstellung von Dimethylaminomethyl-Kupferphthalocyanin mit durchschnittlich 1 bis 4 Dimethylaminomethylgruppen pro Molekül, durch Umsetzung von Aminomethyl-Kupferphthalocyanin, enthaltend durchschnittlich 1 bis 4 Aminomethylgruppen pro Molekül, mit Formaldehyd und Ameisensäure, dadurch gekennzeichnet, dass die Reaktion in 5 bis 25%iger wässriger Ameisensäure, bei Normaldruck und erhöhter Temperatur durchgeführt wird.

Die Reaktionstemperatur ist bevorzugt zwischen 80 und 110°C.

Das Reaktionsprodukt kann kleine Mengen von monomethyliertem Produkt und von unverändertem Ausgangsprodukt enthalten. Diese haben keine schädliche Wirkung auf die Eigenschaften des Endproduktes und es ist deshalb nicht nötig sie vor der Verwendung abzutrennen.

Pro Molekül sind vorzugsweise durchschnittlich 2,5 Dimethylaminomethylgruppen vorhanden.

Das Ausgangsprodukt Aminomethyl-Kupferphthalocyanin kann nach bekannten Verfahren dadurch hergestellt werden, dass das entsprechende Phthalimidomethyl-Kupferphthalocyanin zuerst einer alkalischen und anschliessend einer sauren Hydrolyse unterworfen wird. Das erhaltene Produkt enthält im allgemeinen etwas zurückgebildetes Ausgangsprodukt. Ein Verfahren, bei dem kein Ausgangsprodukt zurückbleibt, besteht darin, das Phthalimidomethyl-Kupferphthalocyanin einer Hydrazinolyse durch Kochen mit 5 bis 15%igem wässrigem Hydrazinhydrat am Rückfluss, zu unterwerfen.

Die folgenden Beispiele erläutern die Erfindung.

### Beispiel 1:

a) Herstellung von Aminomethyl-Kupferphthalocyanin. 30 g 100%iges Phthalimidomethyl-Kupferphthalocyanin (enthaltend ca 2,5 Phthalimidomethyl gruppen pro Molekül) als Filterkuchen werden in 100 g Wasser bei 90°C aufgeschlämmt. Sobald ein homogener klumpenfreier Teig gebildet ist, werden 15 g 98-100%iges Hydrazinhydrat zugegeben und das Gemisch 8 Stunden unter Rühren auf einem auf 130°C erhitzten Oelbad zum Rückfluss gekocht. Das Heizbad wird entfernt, das Gemisch mit Wasser verdünnt und der pH mit Ammoniaklösung (0,88 spezifisches Gewicht) auf 9,0 eingestellt. Das erhaltene Produkt wird abgefiltert und mit 1%igem wässrigem Ammoniak gewaschen. Wenn erwünscht, kann das Aminomethyl-Kupferphthalocyanin bei 60°C getrocknet werden.
b) 100 g Aminomethyl-Kupferphthalocyanin-Presskuchen (enthaltend 2,5 Aminomethylgruppen pro Molekül) mit 27 % Feststoffanteil werden mit 80 g 98%ige Ameisensäure und 187 g Wasser bei 90°C vermischt und bis zur Bildung eines homogenen Gemisches gerührt. Dann werden 18 g 40%iges wässriges Formaldehyd zugegeben. Das Gemisch, welches einer 22,4%igen wässrigen Ameisensäurelösung entspricht, wird 6 Stunden auf 95°C geheizt, anschliessend in 500 ml kaltes Wasser gegeben und mit kaltem Wasser auf 1 l aufgefüllt. Der pH wird mit Ammoniaklösung (0,88 s.G.) auf 8,0 eingestellt. Das erhaltene Produkt wird abfiltriert mit 5 l kaltem Wasser enthaltend 0,1 % Ammoniak gewaschen und bei 60°C getrocknet. Ausbeute: 27,1 g.

### Beispiel 2:

100 g Aminomethyl-Kupferphthalocyanin-Presskuchen (enthaltend 2,5 Aminomethylgruppen pro Molekül) mit 27 % Feststoffanteil werden mit 27 g 98%ige Ameisensäure und 240 g Wasser bei 90°C vermischt und bis zur Bildung eines homogenen Gemisches gerührt. Dann werden 18 g 40%iges wässriges Formaldehyd zugegeben. Das Gemisch, welches einer 7,5%igen wässrigen Ameisensäurenlösung entspricht, wird 6 Stunden auf 95°C geheizt, anschliessend in 500 ml kaltes Wasser gegeben und mit kaltem Wasser auf 1 l aufgefüllt. Der pH wird mit Ammoniaklösung (0,88 s.G.) auf 8,0 eingestellt. Das erhaltene Produkt wird abfiltriert, mit 5 l kaltem Wasser enthaltend 0,1 % Ammoniak gewaschen und bei 60°C getrocknet. Ausbeute: 25 g.

### Beispiel 3 (Vergleichsbeispiel):

100 g Aminomethyl-Kupferphthalocyanin-Presskuchen (enthaltend 2,5 Aminomethylgruppen pro Molekül) mit 21 % Feststoffanteil werden mit 267 g 98%ige Ameisensäure bei 90°C vermischt und bis zur Bildung eines homogenen Gemisches gerührt. Dann werden 18 g 40%iges wässriges Formaldehyd zugegeben. Das Gemisch, welches einer 74,6%igen wässrigen Ameisensäurelösung entspricht, wird 6 Stunden auf 95°C geheizt, anschliessend in 5oo ml kaltes Wasser gegeben und mit kaltem Wasser auf 1 l aufgefüllt. Der pH wird mit Ammoniaklösung (0,88 s.G.) auf 8,0 eingestellt. Das erhaltene Produkt wird abfiltriert, mit 5 l kaltem Wasser enthaltend 0,1 % Ammoniak gewaschen und bei 60°C getrocknet. Ausbeute: 26 g.

### Beispiel 4:

Drei Druckfarben werden wie folgt hergestellt.

Ein Gemisch aus 66,5 g rohem Kupferphthalocyanin, 1,7 g chloriertem Kupferphthalocyanin (Cl=8 %) und jeweils 3,4 g des Produkts von Beispiel 1, 2 bzw. 3 (5 % bezogen auf das Gemisch) wird 3½ Stunden in einer Kugelmühle vermahlen.

12 g dieser Pigmentmischung, 48 g eines phenolischen Mediums [d.h. eines Gemisches, bestehend aus 50 Teilen modifiziertem Phenolharz und 50 Teilen Toluol (®Alsynol RL 30)], 40g Toluol und 200 g Steatit-Kugeln (⌀ 10 mm) werden 16 Stunden bei 20°C auf der Rollbank in einem Glasgefäss bei 115 U/Min. zusammen vermahlen. 25 g der erhaltenen Anreibung werden durch Vermischen mit weiteren 20 g des obenerwähnten phenolischen Mediums und 5 g Toluol in die endgültige Druckfarbe übergeführt.

Die Ausbeute an Druckfarbe, das Fliessverhalten der Druckfarbe und die coloristischen Eigenschaften der Ausfärbungen sind, unter Berücksichtigung der Versuchsfehlergrenze, für alle drei Druckfarben gleich. Dies zeigt, dass das bei Verwendung von verdünnter Ameisensäure unter Normaldruck erhaltene Produkt ebenso wirkungsvoll ist wie dasjenige, das bei Verwendung von konzentrierter Ameisensäure erhalten wird.

## Patentansprüche

1. Verfahren zur Herstellung von Dimethylaminomethyl-Kupferphthalocyanin mit durchschnittlich 1 bis 4 Dimethylaminomethylgruppen pro Molekül, durch Umsetzung von Aminomethyl-Kupferphthalocyanin, enthaltend durchschnittlich 1 bis 4 Aminomethylgruppen pro Molekül, mit Formaldehyd und Ameisensäure, dadurch gekennzeichnet, dass die Reaktion in 5 bis 25%iger wässriger Ameisensäure, bei Normaldruck und erhöhter Temperatur durchgeführt wird.

2. Verfahren gemäss Anspruch 1, dadurch gekennzeichnet, dass das Produkt durchschnittlich 2,5 Dimethylaminomethylgruppen pro Molekül aufweist.

3. Verfahren gemäss Anspruch 1, dadurch gekennzeichnet, dass die Reaktion bei Temperaturen zwischen 80 und 110°C durchgeführt wird.

4. Verfahren gemäss Anspruch 1, dadurch gekennzeichnet, dass das Aminomethyl-Kupferphthalocyanid dadurch erhalten wird, dass Phthalimidomethyl-Kupferphthalocyanin einer Hydrazinolyse durch Kochen mit 5 bis 15%igem wässrigem Hydrazinhydrat am Rückfluss unterworfen wird.

## Claims

1. A process for the preparation of dimethylaminomethyl copper phthalocyanine having an average of 1 to 4 dimethylaminomethyl groups per molecule by reacting aminomethyl copper phthalocyanine containing an average of 1 to 4 aminomethyl groups per molecule with formaldehyde and formic acid, wherein the reaction is carried out in 5 to 25 % aqueous formic acid, at atmospheric pressure, and at an elevated temperature.

2. A process according to claim 1, wherein the product has an average of 2.5 dimethylaminomethyl groups per molecule.

3. A process according to claim 1, wherein the reaction is carried out at temperatures between 80 and 110°C.

4. A process according to claim 1, wherein the aminomethyl copper phthalocyanide is obtained by subjecting phthalimidomethyl copper phthalocyanine to a hydrazinolysis by refluxing with 5 to 15 % aqueous hydrazine hydrate.

## Revendications

1. Procédé pour préparer une diméthylaminométhyl-cuivre-phtalocyanine renfermant en moyenne de 1 à 4 radicaux diméthylaminométhyles par molécule, par réaction d'une aminométhyl-cuivre-phtalocyanine contenant en moyenne de 1 à 4 radicaux aminométhyles par molécule, avec le formaldéhyde et l'acide formique, procédé caractérisé en ce qu'on effectue la réaction dans un acide formique aqueux d'une concentration comprise entre 5 et 25 % _{,} sous la pression normale et à température élevée.

2. Procédé selon la revendication 1, caractérisé en ce que le produit contient en moyenne 2,5 radicaux diméthylaminométhyles par molécule.

3. Procédé selon la revendication 1, caractérisé en ce qu'on effectue la réaction à une température comprise entre 80 et 110°C.

4. Procédé selon la revendication 1, caractérisé en ce qu'on obtient l'aminométhyl-cuivre-phtalocyanine en soumettant la phtalimidométhyl-cuivre-phtalocyanine à une hydrazinolyse par ébullition à reflux avec une solution aqueuse d'hydrate d'hydrazine d'une concentration comprise entre 5 et 15 %.
